(19) Europäisches Patentamt
European Patent Office
Office européen des brevets

(11) EP 3 309 303 A1

(12) EUROPEAN PATENT APPLICATION

(43) Date of publication:
18.04.2018  Bulletin 2018/16

(51) Int Cl.:
E02D 29/12 (2006.01)  H02B 1/26 (2006.01)
H02G 9/10 (2006.01)

(21) Application number: 17190289.3

(22) Date of filing: 11.09.2017

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA MD

(30) Priority: 14.09.2016  IT 201600092634

(71) Applicant: C.I.S. Sud s.r.l.
00040 Ariccia (RM) (IT)

(72) Inventor: BERNARDINI, Giuseppe
00040 Ariccia (RM) (IT)

(74) Representative: Santi, Filippo et al
Barzanò & Zanardo Roma S.p.A.
Via Piemonte 26
00187 Roma (IT)

(54) DISTRIBUTION CABINET FOR TELECOMMUNICATION NETWORK, HOUSED IN A ROAD WELL

(57) The present invention concerns a distribution cabinet (3) for telecommunication network, of the type comprising a watertight structure with parallelepiped shape, with a front face, a rear face, a lower base, an upper base and two lateral faces, and with an opening on the front face, said opening being provided with a closing lid (7), said distribution cabinet (3) being characterised in that said lower base is hinged to a support frame (4), with possibility of rotation between a first position, wherein said cabinet (3) is horizontally disposed and said front face is facing down and said closing lid (7) rests on a portion (15) of said frame (4), and a second position, wherein said distribution cabinet (3) is arranged vertically.

Fig. 5

EP 3 309 303 A1

# Description

The present invention concerns a distribution cabinet for telecommunication network, housed in a road well.

The invention refers to the fields of the installations relating to telephone and more in general telecommunication network, in which field the distribution cabinet for telecommunication network, housed in a road well, according to the present invention, can currently be used in the development of the fibre-optic telephone network, as part of the national project to obtain the ultra-wide bandwidth.

In the system envisaged in this project, the optical network starts from the so-called primary flexibility points (telephone power stations, Pop, etc.) and connects barycentric points of customers, called secondary flexibility points. These secondary flexibility points require street distribution cabinets, which normally feed 256 users, collected at various building termination points.

The result is the need to install new distribution cabinets, which is increasingly difficult to meet, given the difficulty of obtaining permits from the authorities in charge, which own the roads.

In fact, over the years, there has been a significant increase in the installation activity of various types of street cabinets, referring to the most disparate operators of telecommunication networks. In addition, in general, this installation work has been poorly carried out, especially in the integration of street distribution cabinets into the surrounding environment. Wardrobes can be found badly set against the walls of buildings or in an isolated position on the edge of the sidewalks, at the limit of the end of the road. Often, the normal impression is that of conspicuous points with densification of objects of different shape and size. In addition to this, moreover, is the ugly view of the deterioration of materials over time and the damage caused by vandalic acts, such as the covering of street cabinets with signs and posters.

As a result, the overall appearance of the environment surrounding the road cabinet is significantly altered, giving rise to a feeling of general neglect and degradation, which can no longer be underestimated or, worse still, ignored.

In this context, is provided the solution according to the present invention, which aims to provide a distribution cabinet for telecommunication network that is not installed on the edges of the roadside or leaning against the surrounding buildings, and that consequently is not visible under normal conditions of use.

These and other results are obtained according to the present invention by proposing a distribution cabinet for telecommunication network housed in a road well, i. e. in an environment below the level of the road surface and, consequently, such that it does not constitute a physical or even only visual encumbrance for people passing through the road or on the sidewalk in its vicinity.

The aim of the present invention is therefore to provide a distribution cabinet for telecommunication network, housed in a road well, which allows to exceed the limits of distribution cabinets for telecommunication network according to the prior art and to obtain the technical results described above.

A further aim of the invention is that said distribution cabinet for telecommunication network, housed in a road well, can be realized with substantially contained costs, both in terms of production costs and operating costs.

Not least aim of the invention is to propose a distribution cabinet for telecommunication network, housed in a road well, which is simple, safe and reliable.

It therefore forms the specific object of the present invention a distribution cabinet for telecommunication network, of the type comprising a watertight structure with parallelepiped shape, with a front face, a rear face, a lower base, an upper base and two lateral faces, and with an opening on the front face, said opening being provided with a closing lid, wherein said lower base is hinged to a support frame, with possibility of rotation between a first position, wherein said cabinet is horizontally disposed and said front face is facing down and said closing lid rests on a portion of said frame, and a second position, wherein said distribution cabinet is arranged vertically.

Preferably, according to the invention, said closing lid is provided with at least one hook of interlocking closure.

In particular, according to the present invention, said distribution cabinet for telecommunication network comprises a plurality of cables inlet and outlet openings, said openings being arranged on the corner formed by the front face and the lower base of said cabinet.

Still according to the present invention, said frame can comprise an operator support pedestal.

Finally, always according to the invention, said cabinet is apt to be inserted in un road well, together with said frame.

It is evident the effectiveness of the distribution cabinet for telecommunication network, housed in a road well, of the present invention, which makes it possible to have an also economically viable solution, since the well is one of those already used in the network and the distribution cabinet is similar to the street distribution cabinets of known type, and therefore it should not be realized with the presence of additional structures that have a mechanical function of support to loads and/or to possible road overloads.

The present invention will now be described, by way of illustration, but not limitation, according to a preferred embodiment, with particular reference to the figures of the attached drawings, wherein:

-    Figure 1 shows a perspective view of a known road well,
-    Figure 2 shows a side view, partially in section, of the road well of Figure 1 and a distribution cabinet for telecommunication network, according to the present invention, housed inside it,
- Figure 3 shows a side view, partially in section, of the road well and distribution cabinet for telecommunication network of Figure 2, where the distribution cabinet is in opening position,
- Figure 4 shows a frontal view, partially in section, of the road well and distribution cabinet for telecommunication network of Figure 3, with the lid attached to the distribution cabinet, and
- Figure 5 shows the road well and distribution cabinet for telecommunication network of Figure 4, without the lid of the distribution cabinet.

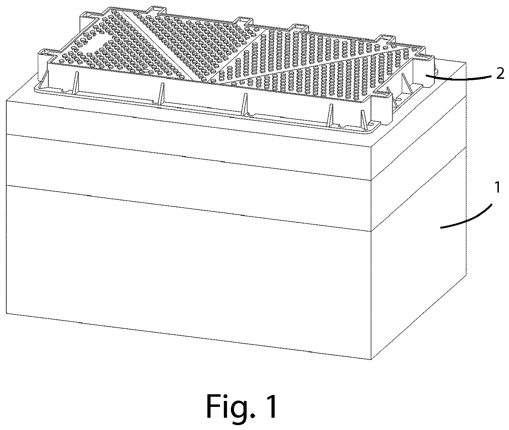

Referring preliminarily to Figure 1, it is shown under number 1 a road well with a lid 2. The road well 1 can be made of reinforced concrete and, by way of example but not limitation to, it can be 125X80cm in size.

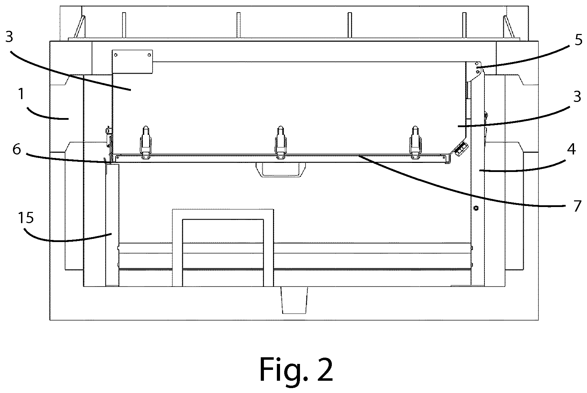

Referring to figure 2, in the normal position of use, a distribution cabinet for telecommunication network according to the present invention, indicated with number 3, is contained inside the road well 1, in the upper part of the same, and is supported by its own support frame 4, inserted in the road well 1.

An edge of the distribution cabinet 3 for telecommunication network, in particular the rear edge of the lower base of the distribution cabinet 3, is hinged to the frame 4, in particular by means of two hinges 5 respectively coupled with two portions of frame 4 and arranged on the same axis of rotation; while another corner, in particular the front edge of the upper base of the distribution cabinet 3, rests on an additional portion 15 of the frame 4, through a portion 6 of cabinet access lid 7 of the distribution cabinet 3.

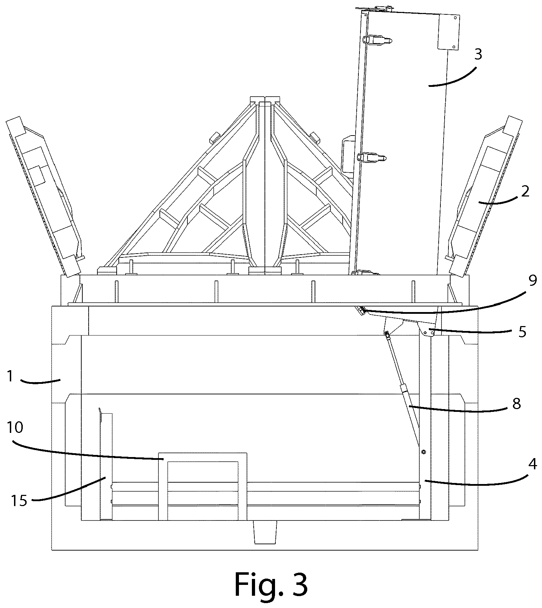

The distribution cabinet 3, thus placed in the upper part of road well 1, is in a horizontal upside-down position with the access lid 7 facing downwards. This positioning of the access lid 7 allows two important advantages to be achieved. First, in the normal use position, i. e. with the cabinet 3 in the position shown in Figure 2, it is not necessary to use a watertight closing cover for the distribution cabinet 3, with consequent economic advantages. Second, in the maintenance position, i. e. with the distribution cabinet 3 in the position shown in Figures 3-5, the possibility of opening the lid 7 and accessing inside the distribution cabinet 3 in a convenient position for the intervention of an operator.

In fact, as far as the first of these advantages is concerned, the water from a possible flooding of the well cannot enter the distribution cabinet 3 for the hydrostatic principle of pressure, covered by the following relation (known as Stevin's relation or Stevin's law):

$$P_1 = P_0 - r \cdot g \cdot (H_0 - H_1)$$

wherein

$H = H_0 - H_1$ indicates the level of water penetration on the entry level of the distribution cabinet 3;
$H_0$ indicates the level of water in the road well relative to the entry level of the distribution cabinet 3;
$H_1$ indicates the level of water inside the distribution cabinet 3, with respect to level $H_0$;
$P_0$ indicates the atmospheric pressure on the surface of water in the well, and is equal to 1 kg/m$^3$;
$P_1$ indicates the internal pressure of the distribution cabinet 3, with the watertight walls to seal above the entrance level of the distribution cabinet 3, and is equal to 0,
r indicates the specific weight of the water, equal to $10^3$kg/m$^3$;
g indicates the acceleration of gravity, equal to 9,81m/s$^2$.

By applying the Stevin's relation, it is obtained:

$$P_0 = P_1 + r \cdot g \cdot (H_0 - H_1) = P_1 + r \cdot g \cdot H$$

$$H = (P_0 - P_1)/(r \cdot g) = (1 - 0)/(r \cdot g) =$$

$$H = 1 / (10^3 \cdot 9{,}81/10^4) = 10^4/ 10^3 \cdot 9{,}81$$

$$H = 10 / 9{,}81 = 1{,}019 \text{ cm}$$

from which it follows that the water level inside the distribution cabinet 3, consequent to a possible flooding of the road well 1, is equal to 1,019 cm, i.e. it is negligible and irrelevant for the functionality of the equipment placed inside the distribution cabinet 3.

Referring to Figure 3, wherein the distribution cabinet 3 according to the present invention is shown laterally, during the opening phase, it is possible to observe that the position of the hinges 5 on the edge of the base of the distribution cabinet 3 allows the maximum exit of the distribution cabinet 3 itself from the road well 1, facilitating easy access for processing.

The rotation of the distribution cabinet 3 around hinges 5 is facilitated by two piston plunger 8, one for each hinge 5.

The openings 9 of the distribution cabinet 3, for the inlet and outlet of cables from the distribution cabinet 3, are prepared with an inclination of 45° with respect to the base and the lid 7. This arrangement covers two important operational aspects. In fact, in the first place, it allows the free movement of cables in the opening and closing operations of the distribution cabinet 3. Moreover, by virtue of their position at a height corresponding to that of the lid 7, the possible imperfect tightness lock of the cables at the inlet and outlet openings 9 does not significantly alter the effect of the hydrostatic pressure principle, previously described.

Figure 3 also shows a pedestal 10, placed on the bottom of the road well 1, which forms an integral part of the frame 4 and which has the function of making the position of the operators more comfortable in maintenance operations.

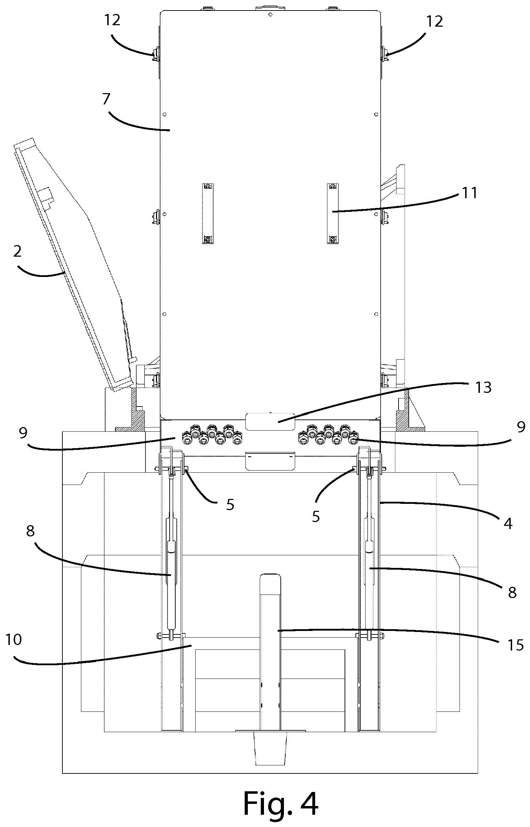

Referring to Figure 4, wherein the distribution cabinet 3 of the present invention is shown during the opening phase, it is possible to observe: two pick-up handles 11, which have the function of facilitating an operator in the opening of the distribution cabinet 3 by removing the lid 7; a plurality of locking hooks 12, placed on the walls of the distribution cabinet 3, except for the base, with the function of locking the lid 7 in the closed position; a U-shaped closure hook 13, for housing and locking of the lower side of the lid 7, especially for housing the central part of the corresponding base side of the lid.

The U-shaped hook 13 allows to insert the lid 7 on the hook, so as to place it in front of the opening of the distribution cabinet 3, thus giving the system an easy opening and closing manoeuvrability for a single operator. In fact, during the opening phase, the operator can open the closing hooks 12, while the lid 7 is supported by The U-shaped hook 13, then lifting the lid 7, taking it with his hands through the two handles 11 of the lid 7. On the other hand, in the closing phase, the operator can take the two handles 11 with his hands, lift the lid and insert it into the U-shaped support, then close the locking hooks 12, while the lid 7 is supported by the U-shaped hook 13.

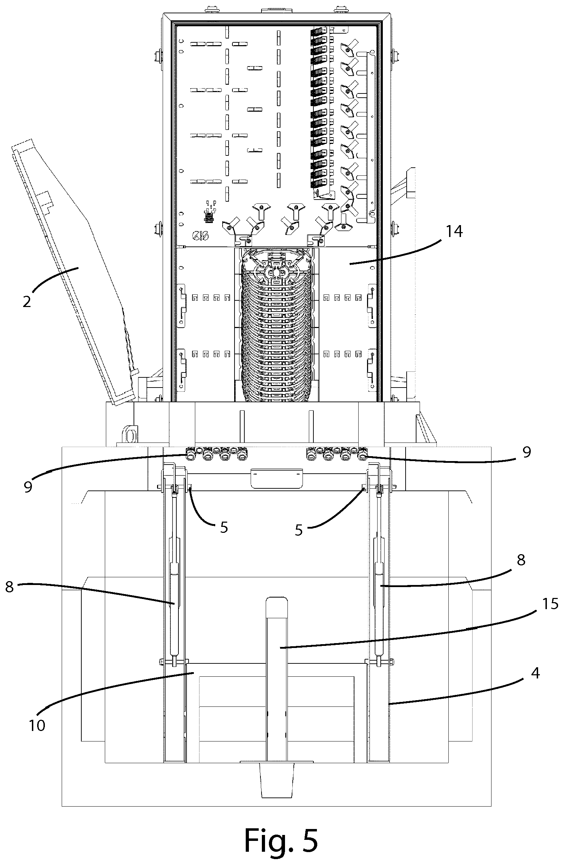

Finally, referring to Figure 5, it is shown how, once opened, the distribution cabinet 3 is easily accessible for working and perfectly identical to the same road version of the known type, above ground. Of course, the interior 14 of the distribution cabinet 3 can be arranged differently, according to different needs, depending on the network requirements.

Figure 5 also shows the two piston plunger 8, one for each hinge 5; the openings 9 for the inlet and outlet of cables; the pedestal 10 for the operator; a portion 15 of the frame 4, which creates the support for portion 6 of the access lid 7 of the distribution cabinet 3 in its horizontal position of rest.

The present invention has been described by way of illustration, but not limitation, according to its preferred embodiments, but it is to be understood that variations and/or modifications may be made by experts in the field without going beyond its scope of protection, as defined by the attached claims.

**Claims**

1. Distribution cabinet (3) for telecommunication network, of the type comprising a watertight structure with parallelepiped shape, with a front face, a rear face, a lower base, an upper base and two lateral faces, and with an opening on the front face, said opening being provided with a closing lid (7), said distribution cabinet (3) being **characterised in that** said lower base is hinged to a support frame (4), with possibility of rotation between a first position, wherein said cabinet (3) is horizontally disposed and said front face is facing down and said closing lid (7) rests on a portion (15) of said frame (4), and a second position, wherein said distribution cabinet (3) is arranged vertically.

2. Distribution cabinet (3) for telecommunication network according to claim 1, **characterised in that** said closing lid (7) is provided with at least one hook (13) of interlocking closure.

3. Distribution cabinet (3) for telecommunication network according to claim 1 or 2, **characterised in that** it comprises a plurality of cables inlet and outlet openings (9), said openings being arranged on the corner formed by the front face and the lower base of said cabinet (3).

4. Distribution cabinet (3) for telecommunication network according to any one of the preceding claims, **characterised in that** said frame (4) comprises an operator support pedestal (10).

5. Distribution cabinet (3) for telecommunication network according to any one of the preceding claims, **characterised in that** it is apt to be inserted in a road well (1), together with said frame (4).

Fig. 1

Fig. 2

Fig. 3

Fig. 4

Fig. 5

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2005 019691 B3 (LANGMATZ LIC GMBH [DE]) 23 November 2006 (2006-11-23) | 1-3,5 | INV. E02D29/12 H02B1/26 H02G9/10 |
| Y | * paragraph [0016] - paragraph [0032]; figures 1-5 * | 4 | |
| X | EP 0 905 842 A2 (ODINK & KOENDERINK BV [NL]; INGBUREAUEBATECH B V [NL]) 31 March 1999 (1999-03-31) | 1,3,5 | |
| Y | * paragraph [0010] - paragraph [0021]; figures 1,2 * | 4 | |
| X | DE 20 2007 004293 U1 (ALMATEC AG [CH]; LANGMATZ LIC GMBH [DE]) 28 June 2007 (2007-06-28) | 1,3,5 | |
| Y | * paragraph [0015] - paragraph [0029]; figures 1-4 * | 4 | |
| Y | DE 103 14 897 B3 (LANGMATZ LIC GMBH [DE]) 14 October 2004 (2004-10-14) * paragraph [0030]; figure 6 * | 4 | |

TECHNICAL FIELDS
SEARCHED      (IPC)

E02D
H02B
H02G

The present search report has been drawn up for all claims

| Place of search | Date of completion of the search | Examiner |
|---|---|---|
| Munich | 6 March 2018 | Geiger, Harald |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**EP 3 309 303 A1**

## ANNEX TO THE EUROPEAN SEARCH REPORT
## ON EUROPEAN PATENT APPLICATION NO.

EP 17 19 0289

06-03-2018

| Patent document cited in search report | | Publication date | Patent family member(s) | | Publication date |
|---|---|---|---|---|---|
| DE 102005019691 | B3 | 23-11-2006 | NONE | | |
| EP 0905842 | A2 | 31-03-1999 | EP 0905842 | A2 | 31-03-1999 |
| | | | NL 1007117 | C2 | 26-03-1999 |
| DE 202007004293 | U1 | 28-06-2007 | DE 102008009649 | A1 | 25-09-2008 |
| | | | DE 202007004293 | U1 | 28-06-2007 |
| | | | DE 202008017945 | U1 | 05-02-2013 |
| DE 10314897 | B3 | 14-10-2004 | NONE | | |

EPO FORM P0459

For more details about this annex : see Official Journal of the European Patent Office, No. 12/82